# EUROPÄISCHE PATENTSCHRIFT

(11) **EP 0 394 189 B1**
(45) Veröffentlichungstag und Bekanntmachung des Hinweises auf die Patenterteilung: **23.06.1993**
(21) Anmeldenummer: 90810236.1
(22) Anmeldetag: 23.03.1990
(51) Int. Cl.: F16B 13/14

(54) **Verankerung an plattenförmigen Bauteilen**
Anchoring in plate shaped element
Ancrage en éléments en forme de plaque

(30) Priorität: 17.04.1989 DE 3912526
(43) Veröffentlichungstag der Anmeldung: 24.10.1990
(73) Patentinhaber: HILTI Aktiengesellschaft, 9494 Schaan (LI)
(72) Erfinder: Hoffmann, Armin, D-8910 Landsberg/Lech (DE); Ludwig, Wolfgang, D-8889 Staufen (DE); Leibhard, Erich, D-8000 München 71 (DE)
(74) Vertreter: Wildi, Roland

(56) Entgegenhaltungen:
- EP-A- 0 275 377
- DE-A- 3 225 051
- DE-B- 2 723 729
- US-A- 4 096 672

## Beschreibung

Die Erfindung betrifft ein Befestigungselement zur Verankerung mittels aushärtender Massen an plattenförmigen Bauteilen, mit einer am setzrichtungsseitigen Ende mit Austrittsöffnungen für die aushärtende Masse versehenen, Lastangriffsmittel aufweisenden Dübelhülse, einem die Dübelhülse umgebenden, eine Bohrung im Bauteil verschliessenden Ringteil und einer die Rückseite des Bauteiles hintergreifenden, von der aushärtenden Masse verfüllbaren Hülle deren entgegen der Setzrichtung dem Bauteil zugewandte Seite mit dem setzrichtungsseitigen Ende des Ringteiles in Verbindung steht.

Mittels aushärtender Massen verankerbare Befestigungselemente werden wegen ihrer Vorteile wie ausbleibendem Spreizdruck, relativ einfachem Setzvorgang und guten Verankerungswerten in zunehmendem Masse angewendet. Bei Verankerungen an plattenförmigen Bauteilen verhindert die eine Dübelhülse umgebende, von der aushärtenden Masse verfüllbare Hülle ein Wegfliessen der aushärtenden Masse. Gleichzeitig wird die Menge der für die Verankerung notwendigen aushärtenden Masse begrenzt.

Aus der DE-PS 25 47 823 ist ein Befestigungselement mit einer Dübelhülse und einer das setzrichtungsseitige Ende der Dübelhülse umgebenden Hülle bekannt. Nach dem Einsetzen des Befestigungselements in eine Bohrung in einem plattenförmigen Bauteil wird die Hülle durch Austrittsöffnungen an der Dübelhülse mit der aushärtenden Masse verfüllt. Die Hülle wird dabei ballonartig aufgebläht und hintergreift das plattenförmige Bauteil. Die Anlagefläche der Hülle an der Rückseite des Bauteiles ist jedoch relativ klein, so dass bei Zugbelastung an der Dübelhülse die Gefahr besteht, dass das Befestigungselement durch das plattenförmige Bauteil durchbricht.

Der Erfindung liegt die Aufgabe zugrunde, ein Befestigungselement zur Verankerung mittels aushärtender Massen an plattenförmigen Bauteilen zu schaffen, das das mit Sicherheit eine grossflächige Anlage an der Rückseite des Bauteiles gewährleistet und die Menge der benötigten Masse ausreichend begrenzt.

Gemäss der Erfindung wird dies dadurch erreicht, dass die Hülle wenigstens an der entgegen der Setzrichtung dem Bauteil zugewandten Seite unter Verfülldruck ein Austreten der aushärtenden Masse erlaubende Oeffnungen aufweist und die setzrichtungsseitige, dem Bauteil abgewandte Seite der Hülle mit dem setzrichtungsseitigen Ende der Dübelhülse in Verbindung steht.

Durch die Oeffnungen in der Hülle kann ein Teil der aushärtenden Masse aus der Hülle austreten. Die auf der dem Bauteil zugewandten Seite austretende aushärtende Masse bildet eine über die Hülle hinausgehende, grossflächige Anlage an der Rückseite des Bauteiles. Bei Zugbelastung an der Dübelhülse wird der von der aushärtenden Masse auf das Bauteil ausgeübte Druck dadurch auf eine grössere Fläche verteilt. Das Verbinden der Hülle einerseits mit dem Ringteil und andererseits mit der Dübelhülse erleichtert das Einführen des Befestigungselementes in eine Bohrung eines Bauteils. Dies kann dadurch erfolgen, dass die Dübelhülse gegenüber dem Ringteil entgegen der Setzrichtung soweit zurückgezogen wird, bis die setzrichtungsseitigen Enden der Dübelhülse und des Ringteils nebeneinander und die beiden Seiten der Hülle somit flach aufeinander liegen. In diesem Zustand kann die Hülle schirmartig zusammengefaltet und in die Bohrung eingeführt werden. Eine weitere Möglichkeit besteht darin, die Dübelhülse entgegen der Setzrichtung vollständig aus dem Ringteil herauszuziehen. Die mit beiden Teilen verbundene Hülle wird dabei durch das Ringteil hindurchgezogen. Nach dem Einsetzen des Ringteils in die Bohrung des Bauteils wird die Dübelhülse in das Ringteil eingesteckt und die Hülle auf die Rückseite des Bauteils gestülpt. In dieser Stellung können die Dübelhülse und das Ringteil vorzugsweise miteinander verrastet werden.

Die Oeffnungen der Hülle sind zweckmässigerweise so gestaltet, dass die aushärtende Masse unter dem Verfülldruck austritt. Dieser Verfülldruck entsteht beispielsweise bei Verwendung aufschäumender Massen durch den Aufschäumdruck oder bei Massen, die mittels an sich bekannter Zuführvorrichtungen eingebracht werden, durch den Einpressdruck.

Dadurch dass die Hülle über ihren gesamten Umfang Oeffnungen aufweist, wobei zweckmässigerweise die an der in Setzrichtung dem Bauteil abgewandten Seite angeordneten Oeffnungen einen kleineren Querschnitt als diejenigen an der entgegen der Setzrichtung dem Bauteil zugewandten Seite aufweisen, entsteht an der dem Bauteil abgewandten Seite nur eine leichte Druchdringung der Hülle, während an der dem Bauteil zugewandten Seite die für den erfindungsgemäss erwünschten Effekt ausreichende Menge an Masse austritt. Die an der dem Bauteil abgewandten Seite ausgetretene Masse führt nach Aushärtung zu einer von der Hülle armierten festen Aussenhaut. Die an der dem Bauteil zugewandten Seite ausgetretene Masse führt zu einer Verfüllung des Raumes zwischen Hülle und Bauteil, so dass sich die geforderte grossflächige Anlage an der Rückseite des Bauteiles ergibt. Trotz Anordnung solcher Oeffnungen ist sichergestellt, dass sich die benötigte Menge an Masse im Rahmen des wirtschaftlich Vertretbaren bewegt.

Das Austreten der Masse an der dem Bauteil zugewandten Seite und das Druchdringen der Hülle an der dem Bauteil abgewandten Seite der Hülle kann vorzugsweise dadurch erreicht werden, dass die Hülle pro Flächeneinheit an der entgegen der Setzrichtung dem Bauteil zugewandten Seite mehr Oeffnungen aufweist, als an der in Setzrichtung dem Bauteil abgewandten Seite.

Die Hülle besteht zweckmässigerweise aus einem Gewebesack. Ein Gewebesack ist luftdurchlässig und ermöglicht somit ein gutes Verfüllen der Hülle mit der aushärtenden Masse. Darüberhinaus ist ein Gewebesack je nach Dichte des Gewebes für die aushärtende Masse durchlässig und kann beim Einführen in eine Bohrung des plattenförmigen Bauteiles relativ leicht zusammengefaltet werden.

Das Austreten an der einen Seite und Durchdringen der Hülle an der anderen Seite wird zweckmässigerweise dadurch erzielt, dass der Gewebesack unterschiedliche Maschenweiten aufweist, wobei die Maschenweite an der entgegen der Setzrichtung dem Bauteil zugewandten Seite grösser als an der in Setzrichtung dem Bauteil abgewandten Seite ist. Damit kann im Bereich der grösseren Maschenweite die für das Abstützen am Bauteil erforderliche Menge an Masse austreten.

Der Gewebesack besteht zweckmässigerweise aus Kunststoffasern wie beispielsweise Nylon, Dralon und dgl. Diese Materialien besitzen eine hohe Flexibilität und sind gegenüber den meisten gebräuchlichen aushärtenden Massen chemisch beständig. Neben den genannten Kunststoffasern können auch Baumwollgewebe, Wollstoffe oder dgl. mit guter Saugfähigkeit verwendet werden.

Die Hülle ist vorteilhaft von einer deren Durchmesser im wesentlichen auf den Aussendurchmessers des Ringteiles reduzierbaren, zerstörbaren Banderole umgeben. Die Hülle wird dabei für das Einführen in eine Bohrung zusammengefaltet und durch die Banderole zusammengehalten. Nach dem Einführen der Hülle in eine Bohrung in einem Bauteil wird die Banderole zerstört und die Hülle entfaltet. Die Banderole kann aus Papier, Kunststoff oder dgl. bestehen.

Die Austrittsöffnungen der Dübelhülse weisen zweckmässig ein Zurückfliessen der aushärtenden Masse verhindernde Ventile auf. Die Ventile werden beim Einbringen der aushärtenden Masse in die Hülle durch den Verfülldruck geöffnet und schliessen sich automatisch, sobald der von aussen auf sie einwirkende Verfülldruck nachlässt. Dadurch, dass die Ventile ein Zurückfliessen der aushärtenden Masse verhindern, wird vermieden, dass aushärtende Masse in die Dübelhülse austritt und nutzlos verloren geht.

Anstelle der Ventile an der Dübelhülse besteht die Möglichkeit, eine Verfüllhilfe mit membranartig ausgebildeter, sich unter Verfülldruck in der aushärtenden Masse verschliessbarer Klappe zu verwenden. Eine solche Verfüllhilfe kann ein- oder mehrmals verwendet werden.

Die Hülle weist vorteilhaft eine umlaufende, die in Setzrichtung dem Bauteil abgewandte Seite von der entgegen der Setzrichtung dem Bauteil zugewandten Seite trennende Schnittzugabe auf. Eine solche Schnittzugabe verhindert, dass aus der Hülle austretende aushärtende Masse von einer Seite der Hülle auf die andere Seite gelangen kann. Durch die Schnittzugabe wird zudem die Anlagefläche zwischen der Hülle und der an der entgegen der Setzrichtung dem Bauteil zugewandten Seite der Hülle austretenden Masse noch vergrössert.

Die beiden Seiten der Hülle können an bestimmten Stellen miteinander verbunden werden. Dadurch wird das Füllvolumen der Hülle und die für das Füllen der Hülle erforderliche Menge aushärtender Masse reduziert. Der Verankerungswert wird dabei praktisch nicht beeinträchtigt.

Die Erfindung soll nachstehend, anhand der sie beispielsweise wiedergebenden Zeichnungen näher erläutert werden. Es zeigen:

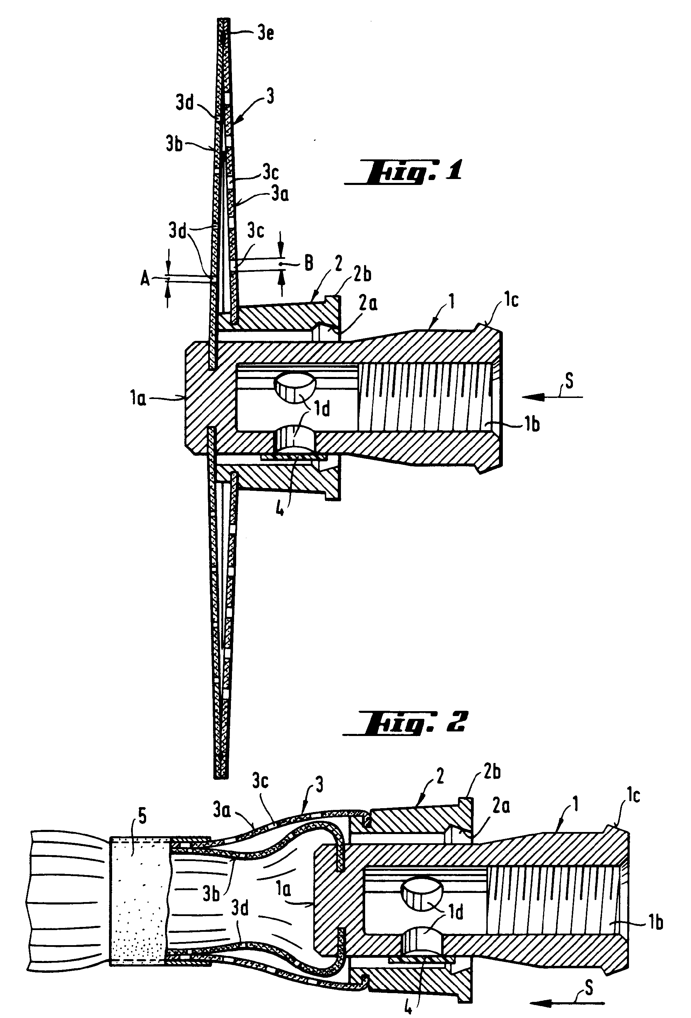

- Fig. 1: ein erfindungsgemässes Befestigungselement vor dem Einsetzen in ein Bauteil;
- Fig. 2: das Befestigungselement gemäss Fig. 1 in einsetzbereitem Zustand;
- Fig. 3: das Befestigungselement gemäss Fig. 1 und 2 in fertig verankertem Zustand.

Das erfindungsgemässe Befestigungselement besteht aus einer Dübelhülse 1, die am setzrichtungsseitigen Ende 1a geschlossen und vom entgegengesetzten Ende her mit einem Innengewinde 1b als Lastangriffsmittel versehen ist. An der Aussenseite weist die Dübelhülse 1 eine umlaufende Rastnase 1c auf. Am einführseitigen Endbereich ist die Dübelhülse 1 mit einer Austrittsöffnung 1d versehen. Die Dübelhülse 1 wird von einem Ringteil 2 umgeben. Das Ringteil 2 weist an seiner Innenseite eine Rastnut 2a auf und ist, wie dies in Fig. 3 dargestellt ist, mit der Dübelhülse 1 über die Rastnase 1c verrastbar. An der Aussenseite ist das Ringteil 2 mit einem Bund 2b versehen. Der Bund 2b dient beim Einsetzen des Ringteiles 2 in ein Bauteil 6 als Anschlag. Sowohl die Dübelhülse 1 als auch das Ringteil 2 sind mit einer Hülle 3 verbunden. Die Hülle 3 besteht aus einer in verankertem Zustand entgegen der Setzrichtung S einem Bauteil 6 zugewandten Seite 3a sowie einer in Setzrichtung S dem Bauteil 6 abgewandten Seite 3b und ist mit Oeffnungen 3c, 3d versehen. Der Querschnitt A der Oeffnungen 3d an der in Setzrichtung S dem Bauteil 6 abgewandten Seite 3b ist kleiner derjenige B der Oeffnungen 3c an der entgegen der Setzrichtung S dem Bauteil 6 zugewandten Seite 3a der Hülle 3. Zudem sind pro Flächeneinheit an der entgegen der Setzrichtung S dem Bauteil 6 zugewandten Seite 3a mehr Oeffnungen angeordnet als an der in Setzrichtung S dem Bauteil 6 abgewandten Seite 3b. Die Hülle 3 ist somit an der dem Bauteil 6 zugewandten Seite 3a durchlässiger als an der dem Bauteil 6 abgewandten Seite 3b.

Die Austrittsöffnung 1d an der Dübelhülse 1 wird durch ein Ventil 4 verschlossen. Das Ventil 4 wirkt dabei als Rückschlagventil, welches unter Verfülldruck automatisch schliesst und ein Zurückfliessen der aushärtenden Masse verhindert.

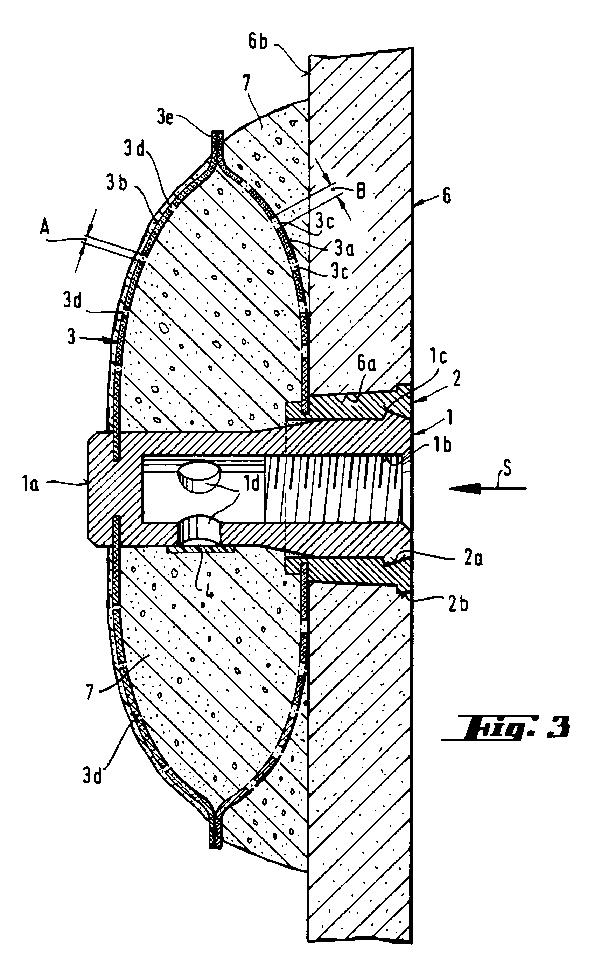

In Fig. 2 ist die Hülle 3 in Setzrichtung zusammengefaltet und durch eine Banderole 5 aus Papier gesichert. In diesem Zustand lässt sich das Befestigungselement auf einfache Weise in eine Bohrung 6a eines plattenförmigen Bauteiles 6 einführen. Der Bund 2b des Ringteiles 2 kommt dabei an der Oberfläche des Bauteils 6 zur Anlage. Dann wird die Dübelhülse 1 gegenüber dem Ringteil 2 teleskopisch verschoben, bis die Rastnase 1c in der Rastnut 2a einrastet. Die Hülle 3 wird dabei unter Zerstörung der Banderole 5 entfaltet und hintergreift die Rückseite 6b des plattenförmigen Bauteils 6. Anschliessend wird die Hülle 3 mit aushärtender Masse 7 verfüllt. Durch die Oeffnungen 3c, 3d gelangt ein Teil der aushärtenden Masse 7 ausserhalb der Hülle 3. Da die Oeffnungen 3d an der dem Bauteil 6 abgewandten Seite 3b kleiner sind als die Oeffnungen 3c an der dem Bauteil 6 zugewandten Seite 3a der Hülle 3 gelangt an der dem Bauteil 6 abgewandten Seite 3b ein kleinerer Anteil aushärtender Masse 7 ausserhalb der Hülle 3 als an der dem Bauteil 6 zugewandten Seite 3a der Hülle 3. Durch die an der dem Bauteil 6 zugewandten Seite 3a austretende aushärtende Masse 7 wird der sich nach aussen erweiternde Spalt zwischen dem Bauteil 6 und der Hülle 3 aufgefüllt und die Hülle 3 somit grossflächig am Bauteil 6 abgestützt. Eine Schnittzugabe 3e der Hülle 3 verhindert einen Uebertritt der aus der Hülle 3 austretenden aushärtenden Masse 7 von einer zur anderen Seite der Hülle 3. Durch die Schnittzugabe 3e wird zudem eine grossflächige Abstützung der Hülle 3 an der entgegen der Setzrichtung S dem Bauteil 6 zugewandten Seite aus der Hülle 3 austretenden aushärtenden Masse 7 erreicht.

Die Hülle 3 besteht vorzugsweise aus einem Gewebesack. Ein solcher Gewebesack kann unterschiedliche Maschenweiten aufweisen, wobei die Maschenweite an der entgegen der Setzrichtung S dem Bauteil zugewandten Seite 3a grösser als an der in Setzrichtung S dem Bauteil 6 abgewandten Seite 3b ist. Dadurch wird wiederum erreicht, dass an der dem Bauteil 6 zugewandten Seite 3a der Hülle 3 mehr aushärtende Masse 7 austritt als an der dem Bauteil 6 abgewandten Seite 3b der Hülle 3. Für eine aus einem Gewebesack bestehende Hülle 3 werden vorzugsweise Kunststoffasern verwendet. Solche Kunststoffasern können beispielsweise Nylon, Dralon oder dgl. sein. Aus Kunststoffasern bestehende Gewebe sind gut verarbeitbar und können beispielsweise mit einer ebenfalls aus Kunststoff bestehenden Dübelhülse bzw. einem Ringteil verklebt oder verschweisst werden. Neben Kunststoffasern können auch Baumwollgewebe, Wollstoffe oder dgl. mit guter Saugfähigkeit verwendet werden.

## Patentansprüche

1. Befestigungselement zur Verankerung mittels aushärtender Massen (7) an plattenförmigen Bauteilen (6), mit einer am setzrichtungsseitigen Ende (1a) mit Austrittsöffnungen (1d) für die aushärtende Masse (7) versehenen, Lastangriffsmittel (1b) aufweisenden Dübelhülse (1), einem die Dübelhülse (1) umgebenden, eine Bohrung (6a) im Bauteil (6) verschliessenden Ringteil (2) und einer die Rückseite des Bauteiles (6) hintergreifenden, von der aushärtenden Masse (7) verfüllbaren Hülle (3) deren entgegen der Setzrichtung (S) dem Bauteil (6) zugewandte Seite (3a) mit dem setzrichtungsseitigen Ende des Ringteiles (2) in Verbindung steht, **dadurch gekennzeichnet**, dass die Hülle (3) wenigstens an der entgegen der Setzrichtung (S) dem Bauteil (6) zugewandten Seite (3a) unter Verfülldruck ein Austreten der aushärtenden Masse (7) erlaubende Oeffnungen (3c) aufweist und die setzrichtungsseitige, dem Bauteil (6) abgewandte Seite (3b) der Hülle (3) mit dem setzrichtungsseitigen Ende (1a) der Dübelhülse (1) in Verbindung steht.

2. Befestigungselement nach Anspruch 1, dadurch gekennzeichnet, dass die Hülle (3) an der in Setzrichtung (S) dem Bauteil (6) abgewandten Seite (3b) Oeffnungen (3d) aufweist, deren Querschnitt (A) kleiner ist als derjenige (B) der Oeffnungen (3c) an der entgegen der Setzrichtung (S) dem Bauteil (6) zugewandten Seite (3a) der Hülle (3).

3. Befestigungselement nach Anspruch 1 oder 2, dadurch gekennzeichnet, dass die Hülle (3) pro Flächeneinheit an der entgegen der Setzrichtung (S) dem Bauteil (6) zugewandten Seite (3a) mehr Oeffnungen (3c) aufweist als an der in Setzrichtung dem Bauteil (6) abgewandten Seite (3b).

4. Befestigungselement nach einem der Ansprüche 1 bis 3, dadurch gekennzeichnet, dass die Hülle (3) aus einem Gewebesack besteht.

5. Befestigungselement nach Anspruch 4, dadurch gekennzeichnet, dass der Gewebesack unterschiedliche Maschenweiten aufweist, wobei die Maschenweite an der entgegen der Setzrichtung (S) dem Bauteil (6) zugewandten Seite (3a) grösser als an der in Setzrichtung (S) dem Bauteil (6) abgewandten Seite (3b) ist.

6. Befestigungselement nach Anspruch 3 oder 4, dadurch gekennzeichnet, dass der Gewebesack aus Kunststoffasern besteht.

7. Befestigungselement nach einem der Ansprüche 1 bis 6, dadurch gekennzeichnet, dass die Hülle (3) von einer deren Durchmesser im wesentlichen auf den Aussendurchmesser des Ringteiles (2) reduzierbaren, zerstörbaren Banderole (5) umgeben ist.

8. Befestigungselement nach einem der Ansprüche 1 bis 7, dadurch gekennzeichnet, dass die Austrittsöffnungen (1d) der Dübelhülse (1) ein Zurückfliessen der aushärtenden Masse verhindernde Ventile (4) aufweisen.

9. Befestigungselement nach einem der Ansprüche 1 bis 8, dadurch gekennzeichnet, dass die Hülle (3) eine umlaufende, die in Setzrichtung (S) dem Bauteil (6) abgewandte Seite (3b) von der entgegen der Setzrichtung (S) dem Bauteil (6) zugewandten Seite (3a) trennende Schnittzugabe (3e) aufweist.

## Claims

1. Fixing element for anchorage to plateshaped assembly components (6) by means of hardening substances (7), comprising a dowel sleeve (1) having at the setting end (1a) load-applicating means (1b) with outlet openings (1d) for the hardening substance (7), an annular element (2) which surrounds the dowel sleeve (1) and seals a bore (6a) in the assembly component (6), and a sleeve (3) which reaches behind the rear of the assembly component (6) and is fillable with the hardening substance (7), its side (3a) facing the assembly component (6) in opposition to the setting direction (S) being connected to the setting end of the annular element 2, **characterised in that** the sleeve (3) comprises, at least at the side (3a) which faces the assembly component (6) in opposition to the setting direction (S), openings (3c) which permit the hardening substance (7) to exit under filling pressure, and the side (3b) at the setting end (1a) facing away from the assembly component (6) is connected to the dowel sleeve (1).

2. Fixing element according to claim 1, **characterised in that** the sleeve (3) has, at the side (3b) which faces away from the assembly component (6) in the setting direction (S), openings (3d), the cross-section (A) of which is smaller than that (e) of the openings (3c) at the side (3a) of the sleeve (3) which is facing the assembly component (6) in opposition to the setting direction (S).

3. Fixing element according to claim 1 or 2, **characterised in that** the sleeve (3) has per surface unit more openings (3c) at the side (3a) which faces the assembly component (6) in opposition to the setting direction (S) than at the side (3b) facing away from the assembly component (6) in the setting direction.

4. Fixing element according to one of claims 1 to 3, **characterised in that** the sleeve (3) is made of a fabric sack.

5. Fixing element according to claim 4, **characterised in that** the fabric sack has different mesh widths, in which respect the mesh width at the side (3a) facing the assembly component (6) in opposition to the setting direction (S) is larger than at the side (3b) facing away from the assembly component (6) in the setting direction (S).

6. Fixing element according to claim 3 or 4, **characterised in that** the fabric sack is made of synthetic fibres.

7. Fixing element according to one of claims 1 to 6, **characterised in that** the sleeve (3) is surrounded by a destructible banderol (5) which substantially reduces the sleeve's diameter to that of the outside diameter of the annular element (2).

8. Fixing element according to one of claims 1 to 7, **characterised in that** the outlet openings (1d) of the dowel sleeve (1) comprise valves (4) which prevent the hardening substance from flowing back.

9. Fixing element according to one of claims 1 to 8, **characterised in that** the sleeve (3) comprises a peripheral cutting supplement (3e) which separates the side (3b) facing away from the assembly component (6) in the setting direction (S) from the side (3a) facing the assembly component (6) in opposition to the setting direction (S).

## Revendications

1. Elément de fixation pour l'ancrage au moyen de masses durcissables (7) sur des éléments de construction (6) en forme de plaques, comprenant une douille de cheville (1) munie de moyens d'application de charge (1b) et présentant à l'extrémité (1a) opposée à la direction de pose des ouvertures de sortie (1d) pour la masse durcissable (7), un élément annulaire (2) qui entoure la douille de cheville (1) et obture un alésage (6a) dans l'élément de construction (6), et une enveloppe (3) qui passe derrière la face arrière de l'élément de construction (6) et peut être remplie par la masse durcissable (7), dont la face (3a) dirigée vers l'élément de construction (6), dans le sens opposé à la direction de pose (S), communique avec l'extrémité de l'élément annulaire (2) située du côté enfoncement, **caractérisé** **en ce** que l'enveloppe (3) présente au moins dans la face (3a) dirigée vers l'élément de construction (6), dans le sens opposé à la direction de pose (S), des ouvertures (3c) qui permettent une sortie de la masse durcissable (7) sous la pression de remplissage, et que, dans la direction de pose, la face (3b) de l'enveloppe (3) opposée à l'élément de construction (6) communique avec l'extrémité (1a) de la douille de cheville (1) située du côté enfoncement.

2. Elément de fixation selon la revendication 1, caractérisé en ce que, vu dans la direction de pose (S), l'enveloppe (3) présente sur la face (3b) opposée à l'élément de construction (6) des ouvertures (3d) dont la section transversale (A) est plus petite que la section (B) des ouvertures (3c) prévues dans la face (3a) de l'enveloppe (3) dirigée vers l'élément de construction (6), dans le sens opposé à la direction de pose (S).

3. Elément de fixation selon l'une des revendications 1 ou 2, caractérisé en ce que l'enveloppe (3) présente sur la face (3a) dirigée vers l'élément de construction (6), dans le sens opposé à la direction de pose (S), un nombre d'ouvertures (3c) par unité de surface plus grand que sur la face (3b) opposée, dans la direction de pose, à l'élément de construction (6).

4. Elément de fixation selon l'une des revendications 1 à 3, caractérisé en ce que l'enveloppe(3) est constituée d'un sac en tissu.

5. Elément de fixation selon la revendication 4, caractérisé en ce que le sac en tissu présente des ouvertures de maille variables, l'ouverture des mailles étant plus grande sur la face (3a) dirigée vers l'élément de construction (6), dans le sens opposé à la direction de pose (S), que sur la face (3b) opposée, dans la direction de pose (S), à l'élément de construction (6).

6. Elément de fixation selon l'une des revendications 3 ou 4, caractérisé en ce que le sac en tissu est constitué de fibres synthétiques.

7. Elément de fixation selon l'une des revendications 1 à 6, caractérisé en ce que l'enveloppe(3) est entourée d'une bandelette(5) destructible qui permet de réduire le diamètre de ladite enveloppe sensiblement au diamètre extérieur de l'élément annulaire (2).

8. Elément de fixation selon l'une des revendications 1 à 7, caractérisé en ce que les ouvertures de sortie (1d) de la douille de cheville (1) comportent des soupapes (4) qui empêchent un reflux de la masse durcissable.

9. Elément de fixation selon l'une des revendications 1 à 8, caractérisé en ce que l'enveloppe (3) présente un excédent de section(3e) circulaire qui sépare la face (3b) opposée, dans la direction de pose (S), à l'élément de construction (6) de la face (3a) dirigée vers l'élément de construction (6) dans le sens opposé à la direction de pose (S).
